Europäisches Patentamt

European Patent Office

Office européen des brevets

(11) Numéro de publication: **0 337 855**
**A1**

## (12) DEMANDE DE BREVET EUROPEEN

(21) Numéro de dépôt: **89400948.9**

(51) Int. Cl.⁴: **A 47 C 27/00**

(22) Date de dépôt: **06.04.89**

(30) Priorité: **13.04.88 FR 8804879**

(43) Date de publication de la demande:
**18.10.89 Bulletin 89/42**

(84) Etats contractants désignés: **BE DE GB IT**

(71) Demandeur: **HUTCHINSON**
**2 rue Balzac**
**F-75008 Paris (FR)**

(72) Inventeur: **Dubus, Michel-Raymond**
**41, Rue de Conflans**
**F-95220 Herblay (FR)**

(74) Mandataire: **Ores, Irène et al**
**CABINET ORES 6, Avenue de Messine**
**F-75008 Paris (FR)**

(54) **Articles de confort comportant une âme de garnissage protégée par une barrière anti-feu.**

(57) La présente invention est relative à un article de confort (10) intégré à une structure de support, telle que siège, accoudoir, appui-tête ou analogue, comportant une âme de garnissage en une mousse polymère inflammable (20) et une barrière de protection (30) contre le feu de cette âme inflammable.

L'article de confort selon l'invention est caractérisé en ce que la barrière anti-feu (30) est réalisée, au moins en partie (31, 32) en polyphosphazène cellulaire, et en ce que la barrière anti-feu comporte des moyens assurant la liaison intime avec l'âme de garnissage à protéger.

Le polyphosphazène cellulaire est avantageusement constitué par un polyaryloxyphosphazène.

Application à l'industrie des transports, notamment à l'aéronautique.

FIG.2

EP 0 337 855 A1

Bundesdruckerei Berlin

# Description

## ARTICLES DE CONFORT COMPORTANT UNE ÂME DE GARNISSAGE PROTEGEE PAR UNE BARRIERE ANTI-FEU.

La présente invention est relative à des articles de confort intégrés à des structures de support,telles que sièges (notamment pour véhicules de transport en commun et plus particulièrement pour avions), accoudoirs,appuis-tête, banquettes, bornes d'amortissement ou analogues, comportant des âmes de garnissage équipées de barrières anti-feu, ainsi qu'à des procédés de fabrication de ces articles.

Il est connu de pourvoir notamment l'ossature des sièges de véhicules d'un garnissage souple de confort, dont la forme s'adapte à celle de l'ossature du siège et qui est constitué par des mousses comportant un revêtement externe en tissu décoratif.

Il est, en outre, classique d'utiliser à cet effet des mousses de polyuréthanne qui sont, parmi les polymères souples existant dans le commerce, qui sont susceptibles d'être utilisés comme garnissage d'articles de confort, probablement le meilleur compromis du point de vue des propriétés mécaniques, du prix de revient et du poids.

Toutefois, étant donné que les mousses de polyuréthanne ont un point d'inflammation très bas, il est devenu de pratique courante de munir un garnissage réalisé en une telle mousse d'une barrière anti-feu constituée par une doublure ou housse ignifuge interposée entre le garnissage et le revêtement décoratif, et ce depuis l'apparition des nouvelles normes de sécurité en matière de protection contre le feu, - notamment de la norme éditée par la Federal Aviation Administration et connue sous la désignation FAR 25-853(c).

Jusqu'à présent, on connaît les types de liaison suivantes entre la barrière anti-feu et le garnissage :

1.- liaison lâche ou flottante, sans adhérisation mutuelle,

2.- liaison intime obtenue :

a) à l'aide d'agents adhésifs (colles) qui, outre à diminuer la souplesse de l'ensemble, présentent des propriétés de résistance au feu qui laissent à désirer et qui compromettent sérieusement la fonction de protection de la doublure anti-feu,

b) par accrochage chimique entre la barrière anti-feu et l'âme de garnissage cellulaire, lors de l'expansion de celle-ci dans la cavité d'un moule tapissé de cette barrière anti-feu (cette liaison est décrite en détail dans la Demande de Brevet au nom de la Demanderesse, FR-87 12494).

La présente invention, écartant la liaison lâche ou flottante, s'est donc donné pour but de pourvoir à des articles de confort du type présentant une structure monolithique (obtenue à l'aide d'une liaison intime chimique du type précité), qui répond mieux aux nécessités de la pratique que les articles de confort antérieurement connus.

A cet effet, la présente invention se propose d'utiliser la propriété intrinsèque du polyphosphazène, qui est définie par sa résistance au feu exceptionnelle et qui est étroitement liée à la structure chimique de ce produit.

Toutefois, l'application du polyphosphazène a été écartée dans l'Art antérieur pour la protection contre le feu de ces articles de confort en raison, d'abord,de la densité relativement élevée de ce matériau (notamment, compte tenu des exigences d'aménagement des avions) et, ensuite, de son coût.

Le facteur densité a joué aussi un rôle déterminant également pour écarter jusqu'à présent l'utilisation du polyphosphazène, non seulement comme matériau pouvant constituer, à lui seul, une structure de garnissage/barrière anti-feu monolithique, mais aussi pour l'utilisation en tant que doublure anti-feu d'un garnissage.

Il est vrai qu'on connaît des polyphosphazènes sous forme cellulaire (voir par exemple le Brevet US-3 994 838) mais, conformément à la tendance générale des techniciens en la matière, on a toujours écarté la possibilité d'utiliser un polyphosphazène cellulaire pour lui faire jouer le rôle de barrière anti-feu pour des articles de confort, et cela en raison du préjugé lié justement à sa nature cellulaire, et donc à la durée de vie d'une telle solution pour des problèmes de tenue mécanique (d'ailleurs, le Brevet US-3 994 838 ne décrit, ni ne suggère, aucune application des polyphosphazènes cellulaires comme revêtements pour articles de confort).

Ce préjugé technique demeure même en présence de la solution décrite dans la Demande de Brevet EP-0 231 968, qui se réfère à une protection contre le feu d'un siège comportant une âme en polyuréthanne ou élastomère cellulaire, cette protection comprenant une couche de polyuréthanne cellulaire rendue résistante au feu. En fait, l'homme du métier sait que le traitement visant à rendre résistant au feu le polyuréthanne cellulaire entraîne, d'une part, la perte de ses qualités mécaniques, car il devient cassant et, d'autre part, la perte des qualités de résistance au feu dans le temps, ce qui réduit sensiblement la durée de vie de la protection et lui empêche de répondre aux normes de sécurité. Cela signifie que la solution objet de la Demande de Brevet EP-0 231 968, loin d'éliminer le préjugé évoqué plus haut, au contraire le renforce.

Or, et ce contrairement à la tendance normale des techniciens en la matière, la présente invention a pour objet un article de confort intégré à une structure de support, telle que siège (notamment pour véhicules de transport en commun et plus particulièrement pour avions), accoudoir, appui-tête, banquette, borne d'amortissement ou analogue, comportant une âme de garnissage en une mousse polymère inflammable et une barrière de protection contre le feu de cette âme inflammable, caractérisé en ce que la barrière anti-feu est réalisée, au moins en partie, en polyphosphazène cellulaire, - à savoir, au moins en ce qui concerne des portions de celle-ci correspondant à des portions de l'article qui assurent le confort d'un utilisateur -, et en ce que la barrière anti-feu comporte des moyens assurant la liaison intime avec l'âme de garnissage à protéger.

Selon un premier mode de réalisation préféré de l'invention, la barrière anti-feu est constituée par une enveloppe de polyphosphazène cellulaire entourant complètement l'âme de garnissage.

Selon une variante avantageuse de ce mode de réalisation, la barrière anti-feu, - qui comporte une portion frontale, une portion dorsale et des portions latérales, parmi lesquelles certaines portions correspondent aux portions précitées qui assurent le confort de l'utilisateur, tandis que d'autres portions sont en contact avec la structure de support -, est réalisée en polyphosphazène cellulaire, en ce qui concerne les portions liées au confort de l'utilisateur,et en un tissu de verre, présentant un haut degré de résistance à la flamme, et enduit (à savoir, rendu étanche) d'une dissolution d'un mélange ignifugé élastomère/silicone, en ce qui concerne les parties en contact avec la structure de support.

Outre les dispositions qui précèdent, l'invention comprend encore d'autres dispositions, qui ressortiront de la description qui va suivre.

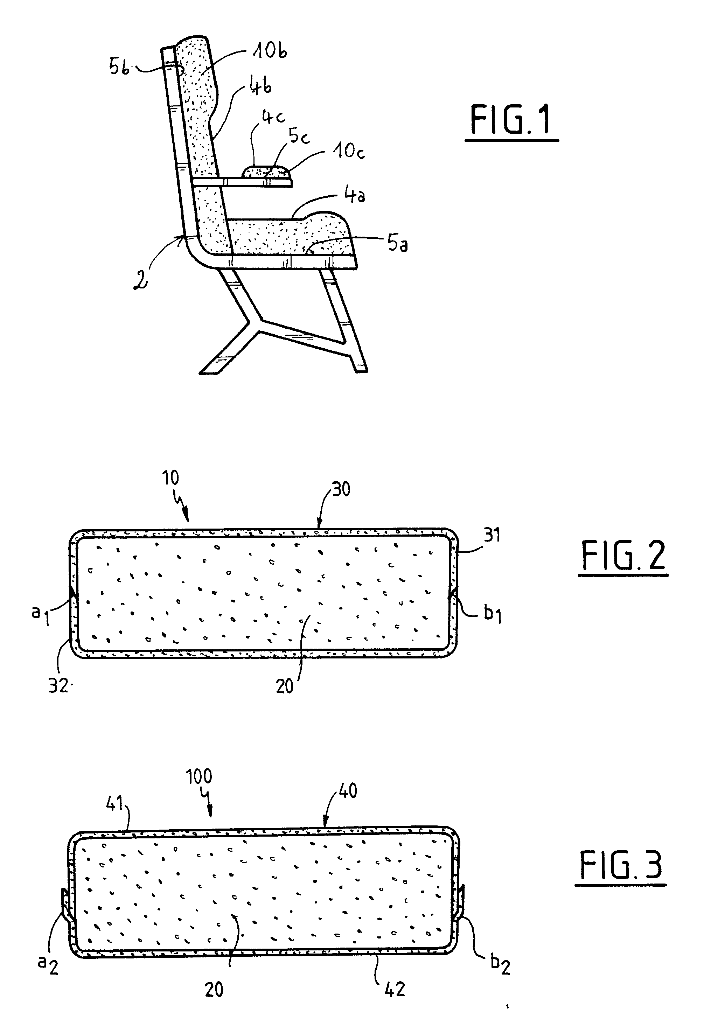

L'invention sera mieux comprise à l'aide du complément de description qui va suivre, qui se réfère au dessin annexé, dans lequel les figures 2 et 3 sont des illustrations schématiques de deux articles de confort représentés en coupe, qui diffèrent essentiellement en ce que la barrière anti-feu enveloppant le garnissage en mousse polymère inflammable est complètement constituée par du polyphosphazène cellulaire dans la figure 2, tandis que dans la figure 3, une partie - qui assure le confort d'un utilisateur - est réalisée en ce matériau, tandis que les autres parties de la barrière - qui sont en contact avec une structure de support du garnissage - sont réalisées en un autre matériau constituant une barrière également efficace contre le feu, par exemple en un tissu de verre enduit d'une dissolution d'un mélange ignifugé élastomère/silicone. La figure 1 illustre schématiquement un siège équipé d'articles de confort conformes à l'invention. Le siège 1 comporte une structure 2 de support des articles de garnissage assurant le confort d'un utilisateur, tels que les pièces indiquées par les références numériques 10a, 10b,10c.

Chacune de ces pièces comprend des surfaces, telles que celles indiquées par les références 4a, 4b, 4c, qui assurent le confort désiré, ainsi que des surfaces, telles que 5a, 5b, 5c, qui sont en contact avec la structure de support 2.

La figure 2 représente en coupe une des pièces de confort 10 illustrées à la figure 1, dont l'âme 20 est constituée par un garnissage en mousse polymère inflammable, notamment en polyuréthanne.

La barrière anti-feu 30 constitue une enveloppe réalisée entièrement en polyphosphazène cellulaire et est intimement liée à l'âme 20. Pour des raisons pratiques, on réalise avantageusement cette enveloppe 30, notamment par moulage, en deux coquilles 31 et 32, dont l'épaisseur est telle qu'elles sont facilement déformables et donc adaptables à l'âme 20, tout en constituant des barrières efficaces contre le feu. Les références $a_1$ et $b_1$ représentent les zones de juxtaposition des lisières correspondant aux deux coquilles 31 et 32.

La figure 3 illustre une variante, 100, de la pièce 10, dans laquelle la barrière anti-feu est constituée par une enveloppe composite 40 comprenant une feuille 41 en polyphosphazène cellulaire, destinée à protéger la surface de l'âme 20 assurant le confort de l'utilisateur, et une feuille 42 réalisée en un autre matériau constituant une barrière également efficace contre le feu, par exemple en un tissu de verre présentant un haut degré de résistance à la flamme et enduit (à savoir, rendu étanche) d'une dissolution d'un mélange ignifugé élastomère/silicone. Ce tissu est destiné à protéger les portions du garnissage en polyuréthanne qui sont en contact avec la structure de support de celui-ci. Les références $a_2$ et $b_2$ représentent les zones de superposition des lisières correspondant aux deux coquilles 41 et 42 (alors qu'à la figure 2 les lisières sont juxtaposées).

Le tissu spécial précité, constituant une partie de la barrière anti-feu, est du type décrit dans la Demande de Brevet au nom de la Demanderesse, FR-87 12678.

En ce qui concerne le procédé de fabrication des pièces de garnissage selon l'invention, celui-ci est du type qui est également décrit dans la Demande de Brevet FR-87 12494, déjà cité plus haut.

Ce procédé comporte l'application d'au moins deux coquilles minces, telles que 31-32 ou 41-42, étanches et déformables, chacune dans un premier et dans un second moule en deux parties. Ces coquilles sont confectionnées préalablement à leur emplacement dans les moules à tapisser. Au moins une coquille (notamment les coquilles telles que 31 ou 41, qui protègent une portion de garnissage destinée à assurer à l'utilisateur le confort recherché) est réalisée à partir d'une feuille de polyphosphazène cellulaire ; tandis que, l'autre coquille (qui protège une portion de garnissage destinée à venir en contact avec la structure de support) peut être réalisée à partir, par exemple, d'une feuille de tissu enduit, du type déjà évoqué plus haut.

Ce procédé assure une liaison intime qui, dans les deux cas illustrés à la figure 2 et à la figure 3, est obtenue en injectant du polyuréthanne à l'intérieur d'un moule dont les parois internes sont tapissées par les deux coquilles 31, 32 constituées par deux feuilles minces et déformables de polyphosphazène cellulaire - obtenues par moulage- dont se compose la barrière anti-feu 30, ou par les deux feuilles 41, 42 dont se compose la barrière anti-feu 40.

De cette manière, on obtient une liaison très étroite et directe entre la barrière anti-feu et le polyuréthanne, lorsque celui-ci vient en contact des coquilles en polyphosphazène ou en polyphosphazène/tissu de verre enduit, pendant son expansion dans la cavité du moule tapissé par ces coquilles, et ce de façon inattendue.

Pour que le polyphosphazène cellulaire constitue une barrière de protection efficace, il faut que chaque coquille réalisée en ce matériau (qui peut présenter, en section, une épaisseur constante ou variable en fonction du profil de la structure de support) ait une épaisseur minimale d'au moins 4 mm.

Ainsi que cela ressort de ce qui précède, l'invention ne se limite nullement à ceux de ses modes de réalisation et d'application qui viennent d'être décrits de façon plus explicite ; elle en embrasse, au contraire, toutes les variantes qui peuvent venir à l'esprit du technicien en la matière, sans s'écarter du cadre, ni de la portée, de la présente invention. En particulier, le matériau dans lequel peuvent être réalisées les portions de la barrière anti-feu qui ne sont pas réalisées en polyphosphazène cellulaire (à savoir, les portions qui sont uniquement en contact avec la structure de support de l'article de confort) n'est pas forcément limité au tissu spécial du type décrit dans la Demande de Brevet FR-87 12678, mais il peut être aussi constitué par un autre tissu et, notamment, par celui déjà décrit dans la Demande de Brevet, évoquée également plus haut, FR 87 12494. Cela signifie que ce tissu spécial peut être réalisé en un tissu élastique, à base de fibres de polyaramide et de fibres préoxydées tissées ensemble, notamment par tricotage, de façon à présenter une élasticité multi-directionnelle . Ce tissu élastique, présentant un haut degré de résistance à la flamme, est enduit d'une composition en une matière polymère élastique, notamment élastomère, comportant une charge destinée à rendre ignifuge cette composition et compatible avec la matière dont se compose l'âme de garnissage.

Bien entendu, dans le cas où l'on utilise en coopération avec la coquille de polyphosphazène cellulaire une coquille réalisée en un tissu de verre enduit, du type susdit, la liaison de celui-ci avec l'âme de garnissage est obtenue par collage, comme déjà évoqué dans la Demande de Brevet FR-87 12678.

(De plus, il y a lieu de préciser que, parmi les polyphosphazènes cellulaires susceptibles d'être utilisés dans le cadre de la présente invention, celui qui a été utilisé pour vérifier la fiabilité de la protection anti-feu conforme à l'invention, et notamment la conformité de cette protection à la norme précitée FAR 25-853(c), est un polyaryloxyphosphazène produit par la Société ETHYL et commercialisé sous le nom de marque de fabrique EYPEL-A PFX-300).

**Revendications**

1.- Article de confort (10a, 10b, 10c, 10, 100) intégré à une structure de support (2), telle que siège, accoudoir, appui-tête, banquette, borne d'amortissement ou analogue, comportant une âme de garnissage en une mousse polymère inflammable (20) et une barrière de protection (30, 40) contre le feu de cette âme inflammable, caractérisé en ce que la barrière anti-feu (30, 40) est réalisée, au moins en partie (31, 32 ; 41) en polyphosphazène cellulaire, - à savoir, au moins en ce qui concerne des portions (31, 41) de celle-ci correspondant à des portions de l'article qui assurent le confort d'un utilisateur-, et en ce que la barrière anti-feu comporte des moyens assurant la liaison intime avec l'âme de garnissage à protéger.

2.- Article de confort selon la revendication 1, caractérisé en ce que la barrière anti-feu (30) est constituée par une enveloppe de polyphosphazène cellulaire entourant complètement l'âme de garnissage (20).

3.- Article de confort selon la revendication 2, caractérisé en ce que l'enveloppe (30) de polyphosphazène cellulaire est réalisées en deux coquilles (31, 32).

4.- Article de confort selon la revendication 1, caractérisé en ce que la barrière anti-feu (40), - qui comporte une portion frontale, une portion dorsale et des portions latérales, parmi lesquelles certaines portions (31, 41) correspondent aux portions précitées assurant le confort de l'utilisateur, tandis que d'autres portions (32, 42) sont en contact avec la structure de support (2) -, est réalisée en polyphosphazène cellulaire, en ce qui concerne les portions (41) assurant le confort, et en un tissu de verre présentant un haut degré de résistance à la flamme et enduit d'une dissolution d'un mélange ignifugé élastomère/silicone, en ce qui concerne les portions (42) en contact avec la structure de support précitée.

5.- Article de confort selon la revendication 1, caractérisé en ce que la barrière anti-feu (40), -qui comporte une portion frontale, une portion dorsale et des portions latérales, parmi lesquelles certaines portions (31, 41) correspondent aux portions précitées assurant le confort de l'utilisateur, tandis que d'autres portions (32, 42) sont en contact avec la structure de support (2)-, est réalisée en polyphosphazène cellulaire, en ce qui concerne les portions (41) assurant le confort, et en un tissu élastique à base de fibres de polyaramide et de fibres pré-oxydées tissées ensemble, notamment par tricotage, de façon à présenter une élasticité multidirectionnelle en ce qui concerne les portions (42) en contact avec la structure de support précitée, lequel tissu élastique, présentant un haut degré de résistance à la flamme, est enduit d'une composition en une matière polymère élastique, notamment élastomère, comportant une charge destinée à rendre ignifuge cette composition et compatible avec la matière dont se compose l'âme de garnissage.

6. - Article de confort selon l'une quelconque des revendications 1 à 5, caractérisé en ce que le polyphosphazène cellulaire est constitué par un polyaryloxyphosphazène.

FIG.1

FIG.2

FIG.3

Office européen
des brevets

**RAPPORT DE RECHERCHE EUROPEENNE**

Numero de la demande

EP 89 40 0948

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y,D | EP-A-0 231 968 (N.V. GECHEM S.A.) <br> * En entier * <br> --- | 1-3,6 | A 47 C 27/00 |
| Y,D | US-A-3 994 838 (THOMSON et al.) <br> * Colonne 1, lignes 13-17,38-47 * <br> --- | 1-3,6 | |
| A | EP-A-0 201 204 (UNITED MERCHANTS AND MANUFACTURERS) <br> * Colonne 6, ligne 25 - colonne 7, ligne 24 * <br> --- | 4 | |
| A | RESEARCH DISCLOSURE, no. 261, janvier 1986, page 70, no. 26175, New York, US; "Flame resistant barrier fabric" <br> * En entier * <br> ----- | 5 | |

DOMAINES TECHNIQUES RECHERCHES (Int. Cl.4)

A 47 C
B 64 D

Le présent rapport a été établi pour toutes les revendications

| Lieu de la recherche | Date d'achèvement de la recherche | Examinateur |
|---|---|---|
| LA HAYE | 18-07-1989 | MYSLIWETZ W.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..............................................
& : membre de la même famille, document correspondant

EPO FORM 1503 03.82 (P0402)